# EUROPEAN PATENT APPLICATION

(11) **EP 4 660 023 A1**
(43) Date of publication of application: **10.12.2025**
(21) Application number: 24179683.8
(22) Date of filing: 03.06.2024
(51) Int. Cl.: B60T 5/00

(54) **TEMPERATURE REGULATION SYSTEM**

(71) Applicant: VOLVO TRUCK CORPORATION, 405 08 Göteborg (SE)
(72) Inventor: MANDAL, Goutam, 732121 MALDA (West Bengal) (IN)
(74) Representative: Germain Maureau

(57) **Abstract**

A temperature regulation system (10) including a heat exchanger (20) including an input section (22a) configured to receive a first fluid and a second fluid, a heat transfer section (24) configured to transfer heat from the first fluid to the second fluid, and an output section (26a) configured to distribute the first fluid and the second fluid, a cooling unit (40) including a cooling line (42) and a heating unit (80) including a heating line (82) in communication with the heat exchanger, a reservoir (44) configured store the first fluid, one or more tank (46, 84) configured to store the second fluid, and a control unit (120) configured to control operation of the cooling unit and the heating unit.

## Description

### TECHNICAL FIELD

The disclosure relates generally to a temperature regulation system configured for use on a vehicle. In aspects, the disclosure relates to a temperature regulation system configured for use on a vehicle to cool and heat one or more of tires of a vehicle and components of a braking assembly of a vehicle. The disclosure may relate to heavy-duty vehicles, such as trucks, buses, and/or construction equipment, among other vehicle types. However, although the disclosure may be described with respect to a particular vehicle, the disclosure is not restricted to any particular vehicle.

### BACKGROUND

Fuel cell electric vehicles and internal combustion engine vehicles each emit water vapor as a byproduct of electrical and/or mechanical energy production. The water vapor is typically discharged into an area surrounding a vehicle, without significant treatment, as a form of fog that can be harmful to other drivers and the environment.

Maintenance of tires of a vehicle and a braking assembly of a vehicle, such as a brake disc and/or brake pad of the braking assembly, is imperative for ensuring optimal safety, durability, and efficiency of the tires and the braking assembly. A temperature of the tires and the braking assembly, due to use and/or the surrounding environment, often has a significant impact on the safety, durability, and efficiency of the tires and the braking assembly.

When a temperature of a tire increases, the air pressure within the tire increases and/or the tire softens, which increases an area of contact between the tire and a road surface. Increase in the area of contact between the tire and the road surface increases wear on the tire and reduces a fuel efficiency of a vehicle. Increase of air pressure within the tire also increases a likelihood of rupture of the tire. When a temperature of a tire decreases, the air pressure within the tire decreases, the tire hardens, and/or ice adheres to the tire, which reduces impact absorbency of the tire, reduces tire grip, and increases a likelihood of slip between the tire and the road surface. Accordingly, abnormal increase and decrease of temperature of the tire may reduce the safety, durability, and efficiency of the tire.

When a temperature of a braking assembly increases, an ability of the braking assembly to generate sufficient friction to stop a vehicle is reduced. Accordingly, abnormal increase of temperature of the braking assembly may reduce the safety, durability, and efficiency of the braking assembly.

It is desirable to provide a temperature regulation system and method configured for use on a vehicle that are capable of utilizing water vapor emitted as a byproduct of electrical and/or mechanical energy production to cool and heat one or more of tires of a vehicle and components of a braking assembly of a vehicle, in a manner that optimizes safety, durability, and efficiency of the tires and the braking assembly. Further, it is desirable to cool and heat one or more of the tires and the braking assembly naturally and/or passively, reducing usage of additional energy from the vehicle to cool and heat one or more of the tires and the braking assembly.

### SUMMARY

According to aspects of the disclosure, a temperature regulation system configured for use on a vehicle is provided. The temperature regulation system includes a heat exchanger configured to transfer heat between a first fluid and a second fluid. The heat exchanger includes an input section configured to receive the first fluid and the second fluid, a heat transfer section configured to transfer heat from the first fluid to the second fluid, and an output section configured to distribute the first fluid and the second fluid. The temperature regulation system includes a cooling unit configured to decrease heat at one or more temperature regulation location on a vehicle. The cooling unit including a cooling line in communication with the heat exchanger. The temperature regulation system includes a reservoir arranged on the cooling line of the cooling unit. The reservoir is configured to receive the first fluid from the output section of the heat exchanger and to store the first fluid. The temperature regulation system includes one or more tank arranged on the cooling line of the cooling unit. The tank is configured to store the second fluid. The temperature regulation system includes a control unit configured to control operation of the cooling unit. Operation of the cooling unit includes the first fluid and the second fluid being directed to the cooling line.

According to aspects of the disclosure, the first fluid may be one or more of a liquid and a gas.

According to aspects of the disclosure, the second fluid may be a gas.

According to aspects of the disclosure, the cooling unit may include a chamber arranged on the cooling line in communication with the reservoir and the tank and the chamber may be configured to receive the first fluid from the reservoir and the second fluid from the tank.

According to aspects of the disclosure, the chamber may be configured to mix the first fluid received from the reservoir with the second fluid received from the tank.

According to aspects of the disclosure, the cooling unit includes a tube arranged on the cooling line in communication with the reservoir and the chamber and the tube may be configured to direct the first fluid from the reservoir toward the chamber.

According to aspects of the disclosure, the tube may be a capillary tube.

According to aspects of the disclosure, the cooling unit may include at least a first tube and a second tube arranged on the cooling line.

According to aspects of the disclosure, the first tube may be configured to be filled to a first extent, the second tube may be configured to be filled to a second extent, and the first extent of the first tube may be greater than the second extent of the second tube.

According to aspects of the disclosure, the first tube may have a first diameter, the second tube may have a second diameter, and the second diameter of the second tube may be greater than the first diameter of the first tube.

According to aspects of the disclosure, the first tube may have a first length, the second tube may have a second length, and the first length of the first tube may be greater than the second length of the second tube.

According to aspects of the disclosure, the cooling unit may include a nozzle arranged on the cooling line in communication with the chamber and the tank and the nozzle may be configured to receive the second fluid from the tank and to deliver the second fluid to the chamber.

According to aspects of the disclosure, the nozzle may be configured to decrease a temperature of the second fluid received from the tank.

According to aspects of the disclosure, the nozzle may be a convergent-divergent nozzle.

According to aspects of the disclosure, the cooling unit may include an injection member arranged in communication with the chamber and the injection member may be configured to distribute a mixture of the first fluid and the second fluid from the cooling line to the temperature regulation location.

According to aspects of the disclosure, the temperature regulation system may include a heating unit configured to increase heat at the one or more temperature regulation location and the heating unit may include a heating line in communication with one or more tank configured to receive the second fluid from the output section of the heat exchanger.

According to aspects of the disclosure, the control unit may be configured to control operation of the heating unit and operation of the heating unit may include the second fluid being directed to the heating line.

According to aspects of the disclosure, the heating unit may include an injection member arranged in communication with the tank arranged in communication with the heating line and the injection member may be configured to distribute the second fluid from the heating line to the one or more temperature regulation location.

According to aspects of the disclosure, a method of regulating a temperature of one or more temperature regulation location on a vehicle is provided. The method includes providing the temperature regulation system according to any aspect of the disclosure presented herein, cooling a first fluid with the heat exchanger, distributing the first fluid to the reservoir from the heat exchanger, storing the first fluid in the reservoir, storing a second fluid in the one or more tank, and controlling operation of the cooling unit with the control unit and directing the first fluid and the second fluid to the cooling line.

According to aspects of the disclosure, the method may include reducing a temperature of the second fluid before directing the second fluid to the cooling line.

According to aspects of the disclosure, a vehicle is provided. The vehicle includes one or more temperature regulation location and the temperature regulation system according to any aspect of the disclosure presented herein.

In the manner described and according to aspects illustrated herein, the temperature regulation system configured for use on a vehicle and the method of regulating a temperature of a temperature regulation location on a vehicle are capable of utilizing water vapor emitted as a byproduct of electrical and/or mechanical energy production to cool and heat one or more of tires of a vehicle and components of a braking assembly of a vehicle, in a manner that optimizes safety, durability, and efficiency of the tires and the braking assembly. Further, the temperature regulation system and the method of regulating a temperature are capable of cooling and heating one or more of the tires and the braking assembly naturally and/or passively, thereby reducing usage of additional energy from the vehicle to cool and heat one or more of the tires and the braking assembly.

The disclosed aspects, examples (including any preferred examples), and/or accompanying claims may be suitably combined with each other as would be apparent to a person having ordinary skill in the art. Additional features and advantages are disclosed in the following description, claims, and drawings, and in part will be readily apparent therefrom to persons skilled in the art and/or recognized by practicing the disclosure as described herein.

### BRIEF DESCRIPTION OF THE DRAWINGS

Aspects of the disclosure will be described with reference to the drawings, where like numerals reflect like elements:
**FIG. 1** shows a vehicle including a temperature regulation system according to aspects of the disclosure;
**FIG. 2** shows a schematic representation of the temperature regulation system according to aspects of the disclosure;
**FIG. 3** shows a schematic representation of an alternative arrangement of the temperature regulation system of **FIG. 2****;**
**FIG. 4** shows a schematic representation of the temperature regulation system of **FIG. 2****,** depicting communication with electronic control unit and one or more sensor according to aspects of the disclosure;
**FIG. 5** shows a side perspective view of a heat exchanger of the temperature regulation system of **FIG. 2** according to aspects of the disclosure;
**FIG. 6** shows an enlarged front view of one or more capillary tube of a cooling unit of the temperature regulation system of **FIG. 2** according to aspects of the disclosure;
**FIG. 7** shows a side perspective view of a nozzle of the cooling unit of the temperature regulation system of **FIG. 2** according to aspects of the disclosure;
**FIG. 8** shows a front view of a temperature regulation location of the vehicle of **FIG. 1** and an injection member of the temperature regulation system of **FIG. 2** according to aspects of the disclosure.

### DETAILED DESCRIPTION

The detailed description set forth below provides information and examples with sufficient detail to enable those skilled in the art to practice the disclosure.

In the description, like numerals represent like parts. Although the technology disclosed herein is described with reference to specific examples, it should be understood that modifications and changes may be made to these examples without going beyond the general scope as defined by the claims. In particular, individual characteristics of the various examples shown and/or mentioned herein may be combined in additional examples. Consequently, the description and the drawings should be considered in a sense that is illustrative rather than restrictive. The Figures, which are not necessarily to scale, depict illustrative aspects and are not intended to limit the scope of the disclosure. The illustrative aspects depicted are intended only as exemplary.

The term "exemplary" is used in the sense of "example," rather than "ideal." While aspects of the disclosure are amenable to various modifications and alternative forms, specifics thereof have been shown by way of example in the drawings and will be described in detail. It should be understood, however, that the intention is not to limit aspects of the disclosure to the particular example(s) described. On the contrary, the intention of this disclosure is to cover all modifications, equivalents, and alternatives falling within the scope of the disclosure.

Various materials, methods of construction and methods of fastening will be discussed in the context of the disclosed example(s). Those skilled in the art will recognize known substitutes for the materials, construction methods, and fastening methods, all of which are contemplated as compatible with the disclosed example(s) and are intended to be encompassed by the appended claims.

As used in this disclosure and the appended claims, the singular forms "a," "an," and "the" include plural referents unless the content clearly dictates otherwise. As used in this disclosure and the appended claims, the term "or" is generally employed in its sense including "and/or" unless the content clearly dictates otherwise.

Throughout the description, including the claims, the terms "comprising a," "including a," and "having a" should be understood as being synonymous with "comprising one or more," "including one or more," and "having one or more" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially," "approximately," and "generally" should be understood to mean falling within such accepted tolerances.

When an element or feature is referred to herein as being "on," "engaged to," "connected to," or "coupled to" another element or feature, it may be directly on, engaged, connected, or coupled to the other element or feature, or intervening elements or features may be present. In contrast, when an element or feature is referred to as being "directly on," "directly engaged to," "directly connected to," or "directly coupled to" another element or feature, there may be no intervening elements or features present. Other words used to describe the relationship between elements or features should be interpreted in a like fashion (e.g., "between" versus "directly between," "adjacent" versus "directly adjacent," etc.).

Spatially relative terms, such as "top," "bottom," "middle," "inner," "outer," "beneath," "below," "lower," "above," "upper," and the like, may be used herein for ease of description to describe one element or feature's relationship to another element(s) or feature(s) as illustrated in the drawings. Spatially relative terms may be intended to encompass different orientations of a device in use or operation in addition to the orientation depicted in the drawings. For example, if the device in the drawings is turned over, elements described as "below," or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

Although the terms "first," "second," "third," etc. may be used herein to describe various elements, components, regions, layers, sections, and/or parameters, these elements, components, regions, layers, sections, and/or parameters should not be limited by these terms. These terms are only used to distinguish one element, component, region, layer, or section from another region, layer, or section. Thus, a first element, component, region, layer, or section discussed herein could be termed a second element, component, region, layer, or section without departing from the teachings of the present disclosure.

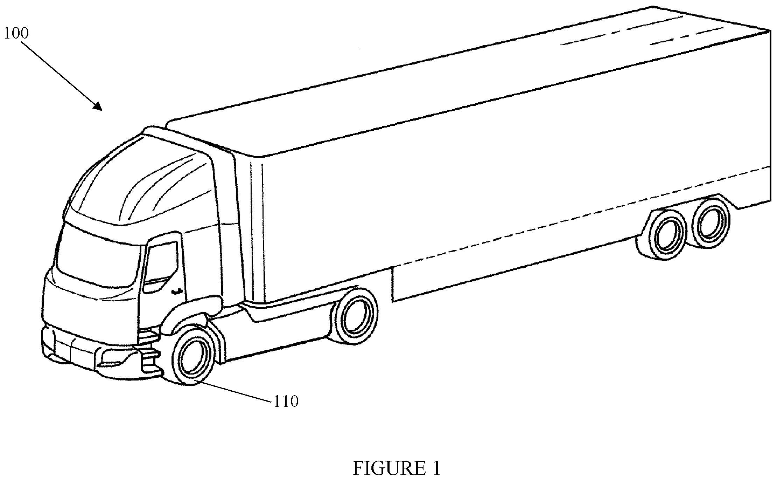

**FIGS. 1-4** show a temperature regulation system 10 (hereafter, "the system 10") configured for use on a vehicle 100. Referring to **FIG. 1****,** it is contemplated that the vehicle 100 may be a heavy-duty vehicle, such as a truck, bus, and/or construction equipment. However, it should be understood that the system 10 may be configured for use on other types of vehicles. Additionally or alternatively, it is contemplated that the system 10 may be configured for use on a fuel cell electric vehicle, such as a hydrogen fuel cell electric vehicle, which reacts hydrogen with oxygen in a fuel cell (not shown) to power an electric motor (not shown). Additionally or alternatively, it is contemplated that the system 10 may be configured for use on an internal combustion engine vehicle. However, reference to a fuel cell electric vehicle will be used for purposes of the description, unless reference to an internal combustion engine vehicle is otherwise necessary.

Referring to **FIGS. 1-4****,** it is contemplated that the vehicle 100 to which the system 10 is configured for use on may include a fuel cell system 200 including at least a fuel cell stack 102 configured to generate electric energy through an electrochemical reaction between hydrogen and oxygen, a fuel tank 104 configured to store hydrogen to be delivered to the fuel cell stack 102, an air supply unit 106 configured to supply oxygen to the fuel cell stack 102, and a thermal management unit 108 configured to maintain an operating temperature range of the fuel cell stack 102 by removing reaction heat in the form of one or more of a gas and a liquid, such as water vapor and water, from the fuel cell stack 102.

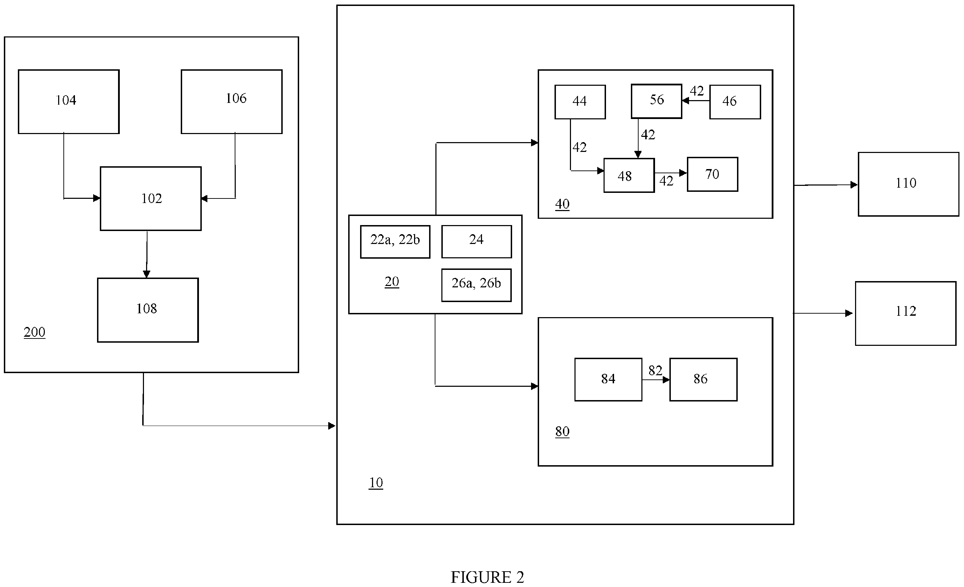

As shown in **FIGS. 2-3** and **5**, the system 10 includes a heat exchanger 20 configured to be arranged in communication with the fuel cell system 200. Additionally or alternatively, the heat exchanger 20 may be configured and/or considered to be part of the fuel cell system 200. The heat exchanger 20 is configured to be arranged in communication with one or more of the air supply unit 106 and the thermal management unit 108 of the fuel cell system 200. In examples, the heat exchanger 20 is configured to be arranged in communication with the temperature management unit 108.

Referring to **FIGS. 2-3** and **5**, the heat exchanger 20 includes one or more input section 22a, 22b configured to receive a first fluid and a second fluid. It is contemplated that "a first fluid" and "a second fluid" each correspond to a type of fluid and that subsequent reference to the first fluid and the second fluid may correspond to the first fluid and the second fluid within a flow path of the system 10 and/or the first fluid and the second fluid generally, independent of a flow path of the system 10. In examples, the heat exchanger 20 may include a first input section 22a configured to receive the first fluid and a second input section 22b configured to receive the second fluid. However, the first input section 22a and the second input section 22b may be referred to herein collectively as "the input section 22a, 22b." The first input section 22a may be configured to receive the first fluid from the fuel cell system 200. In examples, the first input section 22a is configured receive the first fluid from the temperature management unit 108. The first fluid may be one or more of a gas and a liquid. In particular, the first fluid may be one or more of water vapor and water. In examples, the first fluid is water vapor. The first fluid may have a temperature within a range of 60 °C to 70 °C when the first fluid is received through the first input section 22a of the heat exchanger 20.

Referring to **FIGS. 2-3** **and** **5**, the heat exchanger 20 includes a transfer section 24 configured to transfer heat between the first fluid and the second fluid. The second fluid may be a gas. In examples, the second fluid is air. It is contemplated that the second fluid may be present in and received from an area surrounding the heat exchanger 20 (i.e. ambient air). Additionally or alternatively, it is contemplated that the second fluid may be provided by the air supply unit 106. The second input section 22b may be configured to receive the second fluid so that heat can be transferred between the first fluid and the second fluid. Additionally or alternatively, the transfer section 24 may be configured to receive the second fluid so that heat can be transferred between the first fluid and the second fluid. The second fluid may have a temperature within a range of -30 °C to 50 °C when the second fluid is received by the second input section 26b and/or the transfer section 24 of the heat exchanger 20. In examples, the transfer section 24 of the heat exchanger 20 is configured to transfer heat from the first fluid to the second fluid. In this manner, the transfer section 24 may be configured to condense the first fluid from a gas to a liquid. In examples, the transfer section 24 may be configured to condense the first fluid from water vapor to water.

Referring to **FIGS. 2-3** **and** **5**, the heat exchanger 20 includes one or more output section 26a, 26b configured to receive and distribute the first fluid and the second fluid from the transfer section 24 of the heat exchanger 20. In examples, the heat exchanger 20 may include a first output section 26a configured to receive and distribute the first fluid from the transfer section 24 and a second output section 26b configured to receive and distribute the second fluid from the transfer section 24. However, the first output section 26a and the second output section 26b may be referred to herein collectively as "the output section 26a, 26b." The first fluid may have a temperature within a range of 40 °C to 50 °C when the first fluid is distributed from the first output section 26a of the heat exchanger 20. The second fluid may have a temperature within a range of 10 °C to 20 °C when the second fluid is distributed from the second output section 26b of the heat exchanger 20.

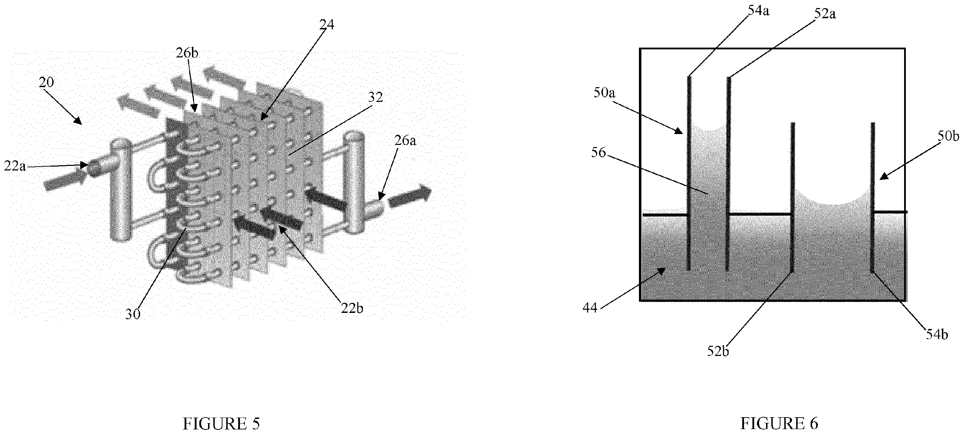

As illustrated by **FIG. 5****,** the heat exchanger 20 may be in the form of a liquid-to-air heat exchanger, in which a flow of the first fluid through one or more tubular channel 30 arranged in the transfer section 24 of the heat exchanger 20 is exposed to a cross flow of the second fluid through one or more passage 32 arranged around the one or more tubular channel 30 in the transfer section 24 of the heat exchanger 20. In examples, the one or more tubular channel 30 is in communication with the first input section 22a and the first output section 26a. The one or more passage 32 is in communication with the second input section 22b and the second output section 26b. However, it is contemplated that alternative heat transfer configurations may be compatible with the system 10.

As shown in **FIGS. 2-3****,** the system 10 includes a cooling unit 40 configured to decrease heat at one or more of a first temperature regulation location 110 and a second temperature regulation location 112 on the vehicle 100 and a heating unit 80 configured to increase heat at one or more of the first temperature regulation location 110 and the second temperature regulation location 112 on the vehicle 100. The first temperature regulation location 110 and the second temperature regulation location 112 may be referred to herein collectively as "the temperature regulation location 110, 112," unless specific reference to the first temperature regulation location 110 and the second temperature regulation location 112 is otherwise necessary. In examples, the first temperature regulation location 110 corresponds to tires of the vehicle 100 and the second temperature regulation location 112 corresponds to components of a braking assembly of the vehicle, such as a brake disc and a brake pad. The cooling unit 40 includes a cooling line 42 configured direct a flow of one or more of the first fluid and the second fluid toward one or more of the first temperature regulation location 110 and the second temperature regulation location 112. The heating unit 80 includes a heating line 82 configured to direct a flow of the second fluid toward one or more of the first temperature regulation location 110 and the second temperature regulation location 112. In this manner, the system 10 is configured for utilizing the first fluid and the second fluid, emitted as a byproduct of electrical and/or mechanical energy production, to cool and heat one or more of the first temperature regulation location 110 and the second temperature regulation location 112.

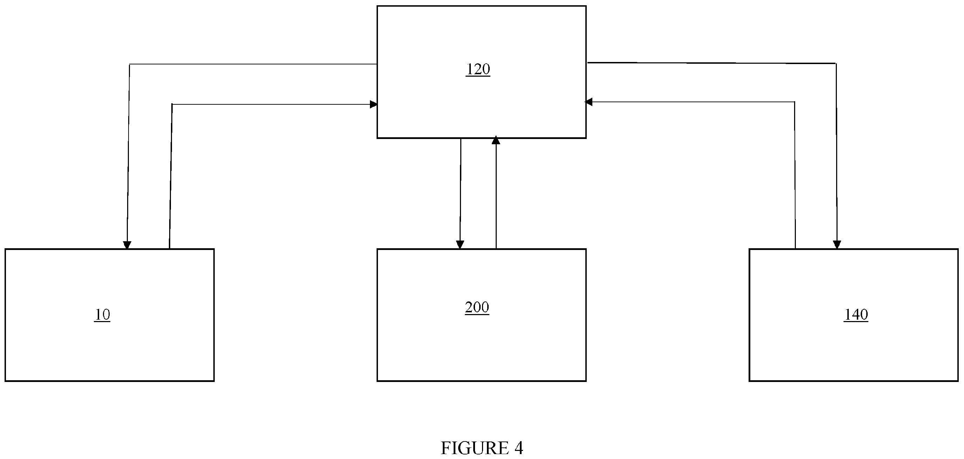

Referring to **FIG. 4****,** it is contemplated that the system 10 includes an electronic control unit 120 (hereafter, "the ECU 120") configured to control and/or trigger operation of the cooling unit 40 and the heating unit 80. The ECU 120 may also be referred to herein as a "control unit." Additionally or alternatively, the ECU 120 may be part of and/or configured to function with the fuel cell system 200 of the vehicle 100. The ECU 120 may be configured to receive operational data from the system 10 and/or the fuel cell system 200. The ECU 120 may be configured to receive data from and/or operate one or more sensor 140 configured to detect a temperature of the temperature regulation location 110, 112. It is contemplated that the sensor 140 may be considered part of and/or configured to function with control systems of the vehicle 100. Additionally or alternatively, the sensor 140 may be considered part of and/or configured to function with the system 10.

In examples, data corresponding to a detection of a temperature of the temperature regulation location 110, 112, which is detected by the sensor 140, is sent to the ECU 120 and, based upon the data corresponding to the detection of the temperature of the temperature regulation location 110, 112, the ECU 120 is configured to control operation of the cooling unit 40 and the heating unit 80. In examples, if the detection of the temperature of the temperature regulation location 110, 112 is above one or more first predetermined temperature threshold, the ECU 120 is configured to operate the cooling unit 40 to decrease the temperature of the temperature regulation location 110, 112. If the detection of the temperature of the temperature regulation location 110, is below one or more second predetermined temperature threshold, the ECU 120 is configured to operate the heating unit 80 to increase the temperature of the temperature regulation location 110. It is contemplated that the first predetermined temperature threshold, the second predetermined temperature threshold, the decrease in temperature of the temperature regulation location 110, 112, and the increase in temperature of the temperature regulation location 110, 112 may be adjusted by the ECU 120 to optimize the system 10. It is contemplated that the ECU 120 may utilize historical data, an algorithm, and/or machine learning to perform such an adjustment to optimize the system 10.

Referring to **FIGS. 2-3****,** the cooling unit 40 includes a reservoir 44 arranged on the cooling line 42. The reservoir 44 is arranged in communication with the heat exchanger 20 and configured to receive the first fluid from the first output section 26a of the heat exchanger 20. The reservoir 44 is configured to store the first fluid received from the first output section 26a of the heat exchanger 20. In examples, the reservoir 44 is configured to provide the first fluid during operation of the cooling unit 40 by the ECU 120.

Referring to **FIGS. 2-3****,** the cooling unit 40 includes a tank 46 arranged on the cooling line 42. The tank 46 may be arranged in communication with the heat exchanger 20 and configured to receive the second fluid from the second output section 26b of the heat exchanger 20. The tank 46 may be configured to store the second fluid received from the second output section 26b of the heat exchanger 20. Alternatively, the tank 46 may be arranged on the cooling line 42 independent of the heat exchanger 20. In examples, the tank 46 may be configured to receive and store the second fluid from a source other than the heat exchanger 20, such as the air supply unit 104. In examples, the tank 46 may be pre-filled with the second fluid. The second fluid may be compressed within the tank 46. The tank 46 is configured to provide the second fluid during operation of the cooling unit 40 by the ECU 120.

Referring to **FIGS. 2-3****,** the cooling unit 40 includes a chamber 48 arranged on the cooling line 42. The chamber 48 is arranged in communication with the reservoir 44 and the tank 46 and configured to receive the first fluid from the reservoir 44 and the second fluid from the tank 46. It is contemplated that the chamber 48 may include one or more first opening (not shown) in communication with the reservoir 44 and configured to receive the first fluid from the reservoir 44. The chamber 48 may include one or more second opening (not shown) in communication with the tank 46 and configured to receive the second fluid from the tank 46. In examples, the chamber 48 is configured to mix the first fluid and the second fluid and/or configured to allow the first fluid and the second fluid to mix within the chamber 48. As such, the chamber 48 extends to a length and a height sufficient to allow for controlled and/or varied mixing of the first fluid and the second fluid across the length of the chamber 48.

As illustrated by **FIGS. 6-7****,** introduction of the first fluid from the reservoir 44 and introduction of the second fluid from the tank 46 is also configured for controlled and/or varied mixing of the first fluid and the second fluid across the length and the height of the chamber 48. Referring to **FIG. 6****,** the cooling unit 40 includes one or more tube 50a, 50b arranged on the cooling line 42 in communication with the reservoir 44 and the chamber 48. In examples, the cooling unit 40 includes a plurality of the tube 50a, 50b arranged on the cooling line 42. However, the plurality of the tube 50a, 50b will be referred to herein as "the tube 50a, 50b," unless reference to the plurality of the tube 50a, 50b and/or individual tubes of the plurality of the tube 50a, 50b is otherwise necessary. The tube 50a, 50b extends from and/or to the reservoir 44 and the chamber 48. The tube 50a, 50b may be integrally formed in one piece with one or more of the reservoir 46 and the chamber 48. Additionally or alternatively, the tube 50a, 50b may be formed independently of one or more of the reservoir 44 and the chamber 48 and inserted into a complimentary opening (not shown) defined by one or more of the reservoir 44 and the chamber 48. The tube 50a, 50b may be considered to be part of one or more of the reservoir 44 and the chamber 48.

Referring to **FIG. 6****,** the tube 50a, 50b is configured to direct the first fluid from the reservoir 44 toward the chamber 48. In examples, the tube 50a, 50b extends between a first end 52a and a second end 52b. The first end 52a defines a first opening 54a and the second end 52b defines a second opening 54b. A conduit 56 extends between the first opening 54a and the second opening 54b. The first end 52a of the tube 50a, 50b is in communication with and/or extends into the reservoir 44 and the second end 52b of the tube 50a, 50b is in communication with and/or extends into the chamber 48.

In examples, the tube 50a, 50b may be configured to direct the first fluid from the reservoir 44 toward the chamber 48 through capillary action. As such, the tube 50a, 50b may be in the form of a capillary tube having a diameter and a length configured for optimal direction of the first fluid from the reservoir 44 toward the chamber 48. Providing the tube 50a, 50b in the form of a capillary tube having a diameter and a length configured for optimal direction of the first fluid from the reservoir 44 toward the chamber 48 allows for the first fluid to be directed naturally and/or passively, without a need for additional electrical and/or mechanical components, such as a pump, thereby reducing usage of additional energy from the vehicle 100.

Referring to **FIG. 6****,** the cooling unit 40 includes at least a first tube 50a and a second tube 50b arranged on the cooling line 42. The first tube 50a may be configured to be filled to a first extent and the second tube 50b may be configured to be filled to a second extent. In examples, the first extent of the first tube 50a is greater than the second extent of the second tube 50b. To this end, the first tube 50a may have a first diameter and the second tube 50b may have a second diameter. The first diameter of the first tube 50a may be greater than the second diameter of the second tube 50b. In examples, the first diameter of the first tube 50a may be within a range of 0.1 mm and 0.5 mm and the second diameter of the second tube 50b may be within a range of 0.5 mm and 1 mm. Additionally or alternatively, the first tube 50a may have a first length and the second tube 50b may have a second length. The first length of the first tube 50a may be greater than the second length of the second tube 50b. In examples, the first length of the first tube 50a may be within a range of 100 mm and 200 mm and the second length of the second tube 50b may be within a range of 200 mm and 300 mm, however, it is contemplated that alternative lengths of one or more of the first tube 50a and the second tube 50b may be compatible with the system 10.

In this manner, due to greater surface tension and adhesive forces in the first tube 50a and/or a greater length of the first tube 50a, the first fluid is capable of filling the first tube 50a to the first extent of the first tube 50a, which is greater than the second extent of the second tube 50b. Varying one or more of first diameter of the first tube 50a, the second diameter of the second tube 50b, the first length of the first tube 50a, and the second length of the second tube 50b allows for optimal control of mixing of the first fluid with the second fluid in the chamber 48. In examples, the cooling unit 40 includes a plurality of the tube 50a, 50b, in addition to the first tube 50a and the second tube 50b, distributed across the length of the chamber 48. Each tube of the plurality of the tube 50a, 50b includes a diameter and length different from at least one other tube of the plurality of the tube 50a, 50b. In this manner, control of mixing of the first fluid with the second fluid in the chamber 48 is further optimized.

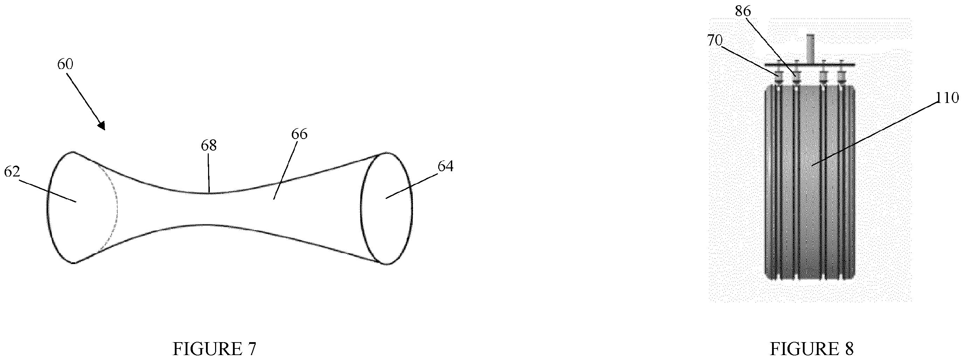

As illustrated by **FIGS. 2-3** **and** 7, the cooling unit 40 includes a nozzle 60 arranged on the cooling line 42 in communication with the tank 46 and the chamber 48. The nozzle 60 is configured to receive the second fluid from the tank 46 and to deliver the second fluid to the chamber 48. Referring to **FIG. 7****,** the nozzle 60 may have an inlet 62 in communication with the reservoir 46 and an outlet 64 in communication with the chamber 48. The nozzle 60 may be configured to decrease a temperature of the second fluid. In examples, the second fluid may have a temperature within a range of 20 °C to 30 °C when the second fluid is received by the nozzle 60 and the second fluid may have a temperature within a range of 5 °C to 15 °C when the second fluid is delivered from the nozzle 60. The nozzle 60 may be configured to increase a velocity of the second fluid. In examples, the second fluid may have a velocity within a range of 5 m/s to 20 m/s when the second fluid is received by the nozzle 60 and the second fluid may have a velocity within a range of 100 m/s to 300 m/s when the second fluid is delivered from the nozzle 60. Referring to **FIG. 7****,** the nozzle 60 may be configured to decrease a temperature of the second fluid and increase a velocity of the second fluid by converting thermal energy of flow of the second fluid into kinetic energy. In examples, the nozzle 60 may be in the form of a convergent-divergent nozzle 60 having a tubular body 66 converging to and diverging from a choked midsection 68. In this manner, the second fluid moves at a velocity optimal for mixing with the first fluid and is provided at a temperature optimal for decreasing temperature of the temperature regulation location 110, 112. Further, in this manner, increasing velocity and decreasing temperature of the second fluid is accomplished naturally and/or passively, without a need for additional electrical and/or mechanical components, thereby reducing usage of additional energy from the vehicle 100.

Referring to **FIGS. 2-3** **and** **8**, the cooling unit 40 includes one or more injection member 70 arranged on the cooling line 42 in communication with the chamber 48 and the temperature regulation location 110, 112. In examples, the cooling unit 40 includes a plurality of the injection member 70 arranged on the cooling line 42 in communication with the chamber 48 and the temperature regulation location 110, 112. However, the plurality of the injection member 70 will be referred to herein as "the injection member 70," unless reference to the plurality of the injection member 70 is otherwise necessary. The injection member 70 is configured to receive the mixture of the first fluid and the second fluid from the chamber 48 and to apply the mixture of the first fluid and the second fluid to the temperature regulation location 110, 112. In this manner, the system 10 uses the mixture of the first fluid and the second fluid, which is at least partially produced from water vapor emitted as a byproduct of electrical and/or mechanical energy production, to cool the temperature regulation location 110, 112 and, thus, optimize safety, durability, and efficiency of the temperature regulation location 110, 112. Further, cooling of the temperature regulation location 110, 112 is undertaken naturally and/or passively, reducing usage of additional energy from the vehicle 100 to cool the temperature regulation location 110, 112.

As shown in **FIG. 2****,** the heating unit 80 may include a tank 84 arranged on the heating line 82. In examples, the tank 84 may be arranged in communication with the heat exchanger 20 and may be configured to receive the second fluid from the second output section 26b of the heat exchanger 20. The tank 84 may be configured to store the second fluid received from the second output section 26b of the heat exchanger 20. The tank 84 may be configured to provide the second fluid during operation of the heating unit 80 by the ECU 120.

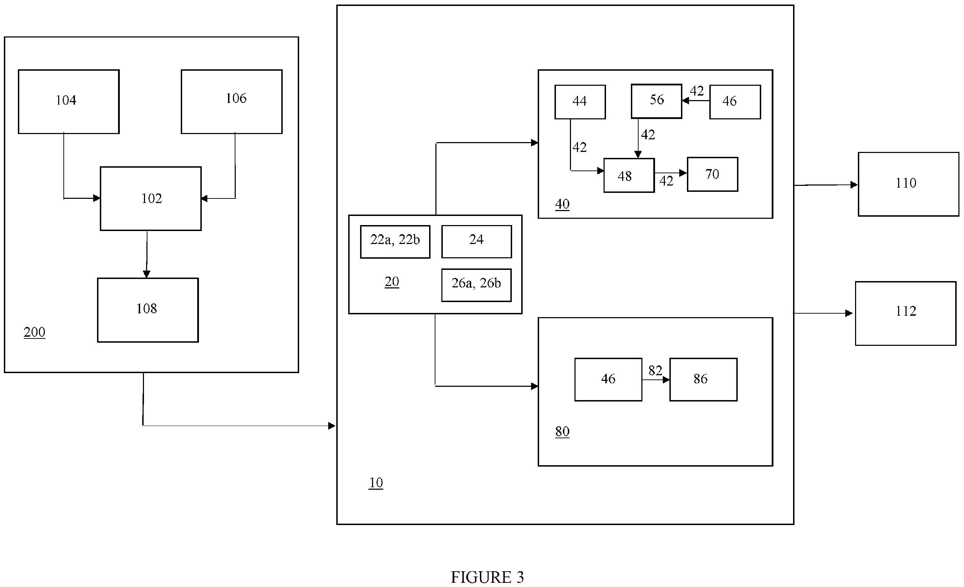

Alternatively, referring to **FIG. 3****,** it is contemplated that the heating unit 80 may include the tank 46 on the heating line 82, in place of the tank 84. In such an example, the tank 46 and, thus, the second fluid stored in the tank 46, may be in communication with each of the cooling unit 40 and the heating unit 80 so that the second fluid stored in the tank 46 may be distributed to each of the cooling line 42 and the heating line 82. Additionally or alternatively, the heating unit 80 may be in communication with and configured to utilize ambient air passed across the heat exchanger 20 for distribution to the heating line 82.

Referring to **FIGS. 2-3** **and** **8**, the heating unit 80 includes one or more injection member 86 arranged on the heating line 82 in communication with the tank 46 or the tank 84 and one or more of the first temperature regulation location 110 and the second temperature regulation location 112. In examples, the heating unit 80 includes a plurality of the injection member 86 arranged on the heating line 82 in communication with the tank 46 or the second tank 86 and one or more of the first temperature regulation location 110 and the second temperature regulation location 112. However, the plurality of the injection member 86 will be referred to herein as "the injection member 86," unless reference to the plurality of the injection member 86 is otherwise necessary. The injection member 86 is configured to receive the second fluid from the tank 46 or the tank 84 and to apply the second fluid to one or more of the first temperature regulation location 110 and the second temperature regulation location 112. In this manner, the system 10 uses the second fluid, which is at least partially produced from water vapor emitted as a byproduct of electrical and/or mechanical energy production, to heat one or more of the first temperature regulation location 110 and the second temperature regulation location 112 and, thus, optimize safety, durability, and efficiency of one or more of the first temperature regulation location 110 and the second temperature regulation location 112. Further, the heating of one or more of the first temperature regulation location 110 and the second temperature regulation location 112 is undertaken naturally and/or passively, reducing usage of additional energy from the vehicle 100 to heat one or more of the first temperature regulation location 110 and the second temperature regulation location 112.

According to examples of the system 10, the system 10 may be provided as follows:
Example 1: A temperature regulation system 10 configured for use on a vehicle 100, the temperature regulation system 10 comprising: a heat exchanger 20 configured to transfer heat between a first fluid and a second fluid, the heat exchanger including an input section 22a configured to receive the first fluid and the second fluid, a heat transfer section 24 configured to transfer heat from the first fluid to the second fluid, and an output section 26a configured to distribute the first fluid and the second fluid; a cooling unit 40 configured to decrease heat at one or more temperature regulation location 110, 112 on the vehicle 100, the cooling unit 40 including a cooling line 42 in communication with the heat exchanger 20; a reservoir 44 arranged on the cooling line 42, the reservoir 44 being configured to receive the first fluid from the output section 26a of the heat exchanger 20, the reservoir 44 being configured to store the first fluid; one or more tank 46 arranged on the cooling line 42, the tank 46 being configured to store the second fluid; a control unit 120 configured to control operation of the cooling unit 40; wherein, operation of the cooling unit 40 includes the first fluid and the second fluid being directed to the cooling line 42.
Example 2: The temperature regulation system 10 of Example 1, wherein the first fluid is one or more of a liquid and a gas.
Example 3: The temperature regulation system 10 of any of Examples 1-2, wherein the second fluid is a gas.
Example 4: The temperature regulation system 10 of any of Examples 1-3, wherein the cooling unit 40 includes a chamber 48 arranged on the cooling line 42 in communication with the reservoir 44 and the tank 46, the chamber 48 being configured to receive the first fluid from the reservoir and the second fluid from the tank.
Example 5: The temperature regulation system 10 of Example 4, wherein the chamber 48 is configured to mix the first fluid received from the reservoir 44 with the second fluid received from the tank 46.
Example 6: The temperature regulation system 10 of any of Examples 4-5, wherein the cooling unit 40 includes a tube 50a, 50b arranged on the cooling line 42 in communication with the reservoir 44 and the chamber 48, the tube 50a, 50b being configured to direct the first fluid from the reservoir 44 toward the chamber 48.
Example 7: The temperature regulation system 10 of Example 6, wherein the tube 50a, 50b is a capillary tube.
Example 8: The temperature regulation system 10 of any of Examples 6-7, wherein the cooling unit 40 includes at least a first tube 50a and a second tube 50b arranged on the cooling line 42.
Example 9: The temperature regulation system 10 of Example 8, wherein the first tube 50a is configured to be filled to a first extent, the second tube 50b is configured to be filled to a second extent, and the first extent of the first tube 50a is greater than the second extent of the second tube 50b.
Example 10: The temperature regulation system 10 of any of Examples 8-9, wherein the first tube 50a has a first diameter, the second tube 50b has a second diameter, and the second diameter of the second tube 50b is greater than the first diameter of the first tube 50a.
Example 11: The temperature regulation system 10 of any of Examples 8-10, wherein the first tube 50a has a first length, the second tube 50b has a second length, and the first length of the first tube 50a is greater than the second length of the second tube 50b.
Example 12: The temperature regulation system 10 of any of Examples 4-11, wherein the cooling unit 40 includes a nozzle 60 arranged on the cooling line 42 in communication with the chamber 48 and the tank 46 and configured to receive the second fluid from the tank 46 and to deliver the second fluid to the chamber 48.
Example 13: The temperature regulation system 10 of Example 12, wherein the nozzle 60 is configured to decrease a temperature of the second fluid received from the tank 46.
Example 14: The temperature regulation system 10 of any of Examples 12-13, wherein the nozzle 60 is a convergent-divergent nozzle.
Example 15: The temperature regulation system 10 of any of Examples 1-14, wherein the cooling unit 40 includes injection member 70 arranged in communication with the chamber 48 and configured to distribute a mixture of the first fluid and the second fluid from the cooling line 42 to the temperature regulation location 110, 112.
Example 16: The temperature regulation system 10 of any of Examples 1-15, comprising a heating unit 80 configured to increase heat at the one or more temperature regulation location 110, 112, the heating unit including a heating line 82 in communication with one or more tank 46, 84 configured to receive the second fluid from the output section 26b of the heat exchanger 20.
Example 17: The temperature regulation system 10 of Example 16, wherein the control unit 120 is configured to control operation of the heating unit 80 and operation of the heating unit 80 includes the second fluid being directed to the heating line 82.
Example 18: The temperature regulation system 10 of any of Examples 16-17, wherein the heating unit 80 includes an injection member 86 arranged in communication with the tank 46, 84 and configured to distribute the second fluid from the heating line 82 to the one or more temperature regulation location 110, 112.
Example 19: A method of regulating a temperature of one or more temperature regulation location 110, 112 on a vehicle 100, the method comprising: providing the temperature regulation system 10 according to any of Examples 1-18, cooling a first fluid with the heat exchanger 20, distributing the first fluid to the reservoir 44 from the heat exchanger 20, storing the first fluid in the reservoir 44, storing a second fluid in the tank 46, and controlling operation of the cooling unit 40 with the control unit 120 and directing the first fluid and the second fluid to the cooling line 42.
Example 20: The method of regulating a temperature of Example 19, wherein the method includes reducing a temperature of the second fluid before directing the second fluid to the cooling line 42.
Example 21: A vehicle 100 comprising one or more temperature regulation location 110, 112 and the temperature regulation system 10 according to any of Examples 1-19

Although the present disclosure herein has been described with reference to particular examples, it is to be understood that these examples are merely illustrative of the principles and applications of the present disclosure.

It is intended that the specification and examples be considered as exemplary only, with a true scope of the disclosure being indicated by the following claims.

Additionally, all of the disclosed features of a system may be transposed, alone or in combination, to a method and vice versa.

## Claims

1. A temperature regulation system (10) configured for use on a vehicle (100), the temperature regulation system comprising:
a heat exchanger (20) configured to transfer heat between a first fluid and a second fluid, the heat exchanger including an input section (22a) configured to receive the first fluid and the second fluid, a heat transfer section (24) configured to transfer heat from the first fluid to the second fluid, and an output section (26a) configured to distribute the first fluid and the second fluid,
a cooling unit (40) configured to decrease heat at one or more temperature regulation location (110, 112) on the vehicle (100), the cooling unit including a cooling line (42) in communication with the heat exchanger (20);
a reservoir (44) arranged on the cooling line (42), the reservoir being configured to receive the first fluid from the output section (26a) of the heat exchanger (20), the reservoir being configured to store the first fluid;
one or more tank (46) arranged on the cooling line (42), the tank being configured to store the second fluid; and
a control unit (120) configured to control operation of the cooling unit (40);
wherein, operation of the cooling unit (40) includes the first fluid and the second fluid being directed to the cooling line (42).

2. The temperature regulation system (10) of claim 1, wherein the first fluid is one or more of a liquid and a gas.

3. The temperature regulation system (10) of any of claims 1-2, wherein the second fluid is a gas.

4. The temperature regulation system (10) of any of claims 1-3, wherein the cooling unit (40) includes a chamber (48) arranged on the cooling line (42) in communication with the reservoir (44) and the tank (46), the chamber being configured to receive the first fluid from the reservoir and the second fluid from the tank.

5. The temperature regulation system (10) of claim 4, wherein the chamber (48) is configured to mix the first fluid received from the reservoir (44) with the second fluid received from the tank (46).

6. The temperature regulation system (10) of any of claims 4-5, wherein the cooling unit (40) includes a tube (50a, 50b) arranged on the cooling line (42) in communication with the reservoir (44) and the chamber (48), the tube being configured to direct the first fluid from the reservoir toward the chamber.

7. The temperature regulation system (10) of claim 6, wherein the tube (50a, 50b) is a capillary tube.

8. The temperature regulation system (10) of any of claims 6-7, wherein the cooling unit (40) includes at least a first tube (50a) and a second tube (50b) arranged on the cooling line (42).

9. The temperature regulation system (10) of claim 8, wherein the first tube (50a) is configured to be filled to a first extent, the second tube (50b) is configured to be filled to a second extent, and the first extent of the first tube is greater than the second extent of the second tube.

10. The temperature regulation system (10) of any of claims 8-9, wherein the first tube (50a) has a first diameter, the second tube (50b) has a second diameter, and the second diameter of the second tube is greater than the first diameter of the first tube.

11. The temperature regulation system (10) of any of claims 8-10, wherein the first tube (50a) has a first length, the second tube (50b) has a second length, and the first length of the first tube is greater than the second length of the second tube.

12. The temperature regulation system (10) of any of claims 4-11, wherein the cooling unit (40) includes a nozzle (60) arranged on the cooling line (42) in communication with the chamber (48) and the tank (46) and configured to receive the second fluid from the tank and to deliver the second fluid to the chamber.

13. The temperature regulation system (10) of claim 12, wherein the nozzle (60) is configured to decrease a temperature of the second fluid received from the tank (46).

14. A method of regulating a temperature of one or more temperature regulation location (110, 112) on a vehicle (100), the method comprising:
providing the temperature regulation system (10) according to any of claims 1-13;
cooling a first fluid with the heat exchanger (20);
distributing the first fluid to the reservoir (44) from the heat exchanger (20);
storing the first fluid in the reservoir (44);
storing a second fluid in the tank (46); and
controlling operation of the cooling unit (40) with the control unit (120) and directing the first fluid and the second fluid to the cooling line (42).

15. A vehicle (100) comprising one or more temperature regulation location (110, 112) and the temperature regulation system (10) according to any of claims 1-13.
